# EUROPEAN PATENT APPLICATION

(11) **EP 0 853 369 A2**
(43) Date of publication of application: **15.07.1998**
(21) Application number: 97121858.1
(22) Date of filing: 11.12.1997
(51) Int. Cl.: H02K 5/22

(54) **A system for connecting an electrical cable at a predetermined angle to a terminal of electrical apparatus, in particular an alternator for a motor vehicle**

(30) Priority: 13.12.1996 IT TO961026
(71) Applicant: FIAT AUTO S.p.A., 10135 Torino (IT)
(72) Inventor: Spina, Donato, 10138 Torino (IT); Fogliato, Gianni, 10046 Poirino (IT)
(74) Representative: Jorio, Paolo

(57) **Abstract**

The output electrical cable (5) from an alternator (2) of a motor vehicle must be mounted around the cable clamp terminal (3) projecting from a cover (1) of the alternator casing with a different angular orientation depending on the model of the vehicle; an orientable cable-guide bracket (12) is disposed on the terminal (3) and can be turned with respect to it to predetermined angles and locked in the predetermined angular position with respect to the cover (1) by means of at least one tooth (18, 32) which can be inserted into a reference seat (19, 33) positioned on the cover (1); the cable-guide bracket (12) is provided with two parallel tabs (15) which can retain the cable (5) and maintain it in the desired orientation; a possible protective box (22, 36) rotatably mounted on the cover (1) encloses the cable-guide bracket (12) and the cable clamp terminal (3) regardless of its orientation.

## Description

The present invention relates to a system for connecting an electrical cable to a terminal of electrical apparatus, and more particularly to the connection of an electrical cable to a cable clamp projecting from a cover of the casing of an alternator of a motor vehicle, in which the cable must be orientated, for reasons of space, in different angular positions depending on the model of the motor vehicle on which the alternator is mounted.

Currently, as is known the electrical output cable from an alternator of a motor vehicle is fixed to the cable clamp at a fixed orientation relative to the alternator casing, determined by a suitable shape of the cover.

However, because of the close proximity to the alternator of other components of the vehicle the cable is constrained, for reasons of space, to follow different paths (in technical terms a different 'layout') not only on different vehicles but even on different versions of the same vehicle. This sometimes involves difficulties in assembly and, moreover, a high cost connected to the necessity of having to store different covers depending on the different layouts required for each model in production, which also leads to a proliferation of different identification codes for almost identical parts, with all the disadvantages connected to the possibilities of confusion.

The object of the present invention, therefore, is that of providing a system for connecting an electrical cable to a terminal of electrical apparatus, and more particularly to the terminal of a motor vehicle alternator, which will be free from the described disadvantages and, in particular, of low cost, reduced size and easy assembly.

Another object of the present invention is that of providing a type of connection for connecting an electrical cable to the terminal of an alternator of a motor vehicle such as to allow orientation of the electrical cable with respect of the alternator in the most suitable angular position in dependence on the space available, and adapted to the requirements of mounting and dismounting of the alternator on different models of the motor vehicles.

Another aspect of the invention is that of associating the electrical cable with a protection device which can be orientated together with the electrical cable, and which can be locked with respect to the casing of the alternator in each of the predetermined angular positions assumed in use by the electrical cable.

In accordance with the predefined objects, there is provided a system for connecting an electrical cable to a terminal of electrical apparatus, in the specific example an alternator for a motor vehicle, in which the said cable is provided with a connecting terminal element which can be fixed to the said terminal at a predetermined angle,
characterised in that it comprises a guide element for the said cable which can co-operate with the said terminal element to provide the said predetermined orientation of the cable, the said guide element being formed as an independent element with respect to the terminal but connectable fixedly thereto, and being provided with stop means selectively arranged in at least one predetermined angular position, able to co-operate with corresponding angular reference elements prearranged in a fixed angular position on the said apparatus.

According to another aspect to the invention the connection system according to the invention is characterised in that the said guide element comprises a cable-guide bracket able to house the said terminal connection element, constituted by a pair of parallel tabs integrally formed with a base plate, which can be connected to the said terminal to assume pre-established angular positions with respect to the said terminal.

There follows a detailed description of a preferred embodiment of the invention, by way of non-limitative example, with reference to the attached drawings, in which:
Figure 1 is a plan view of the system for connection of an electrical cable to an alternator of a motor vehicle, according to the invention;
Figure 2 is a section through the connection system, taken on the line II-II of Figure 1;
Figure 3 shows (left and right parts) two examples of the protection guard on the cover of the alternator;
Figure 4 is an axonometric exploded view of the connection system of Figure 1;
Figures 5a, 5b and 5c show several possible angular configurations of the cable-guide bracket of Figure 1; and
Figure 6 shows a simplified embodiment of the protective guard and the cable-guide bracket.

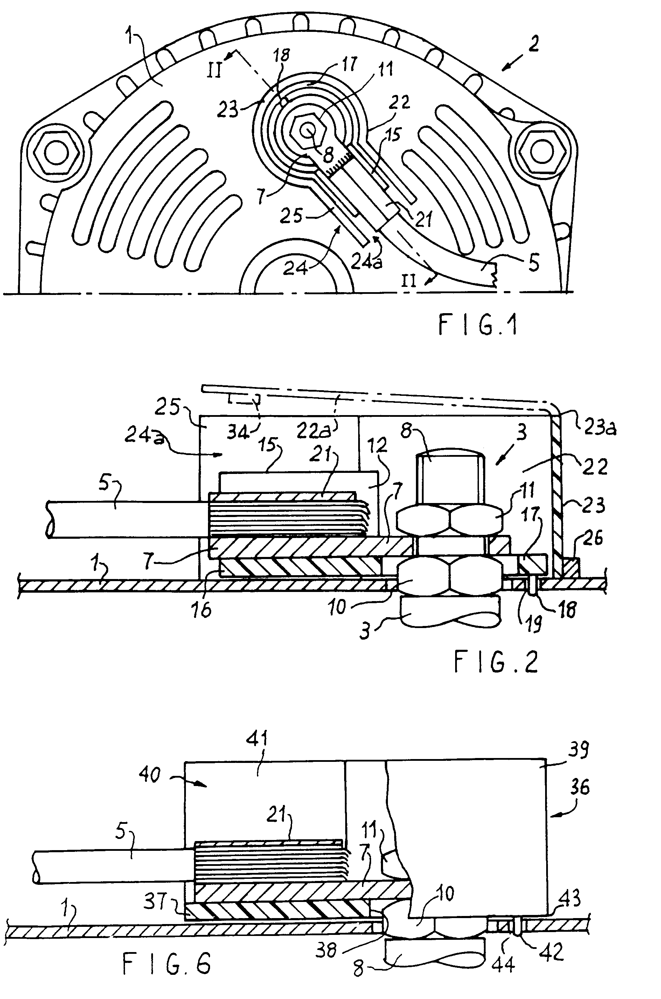

With reference to Figure 1, the reference numeral 1 indicates a cover of the protective casing of an electrical apparatus utilising the connection system according to the invention, in the specific example a service alternator 2 for a motor vehicle.

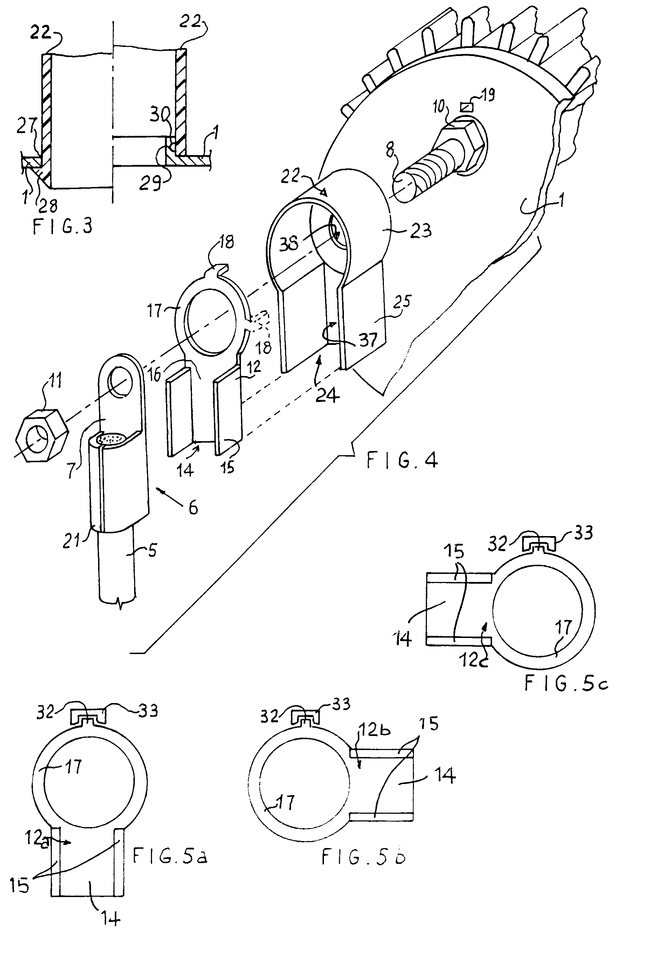

From the cover 1 projects an electric connection member 3, in the specific example the D+ terminal, to which an electrical cable 5 (in the specific example a cable denominated B+) is connected by means of a terminal connection element 6 (Figure 4), constituted by a known cable connector lug 7 shaped with an eye and fixed securely to one end of the cable itself.

The terminal 3 is constituted, in the non-limitative exemplary embodiment illustrated in the drawings, by a threaded shank 8, fixed to the alternator 2 by means of a locking nut 10; the connector 7 is fitted to the shank 8 clamped in use against the locking nut 10 with a second nut 11.

According to the type of vehicle on which the alternator 2 is mounted, the cable 5 must be connected at a different angular orientation because of the bulk of other components mounted very close to the alternator itself, which are known and not illustrated; for simplifying the mounting and removal of the cable 5 to and from the alternator 2, according to the invention, there is used a guide element 12 of insulating material formed as an independent and separate element from the cover 1, mounted on the terminal 3 and able to house the cable 5 with the connector lug 7, whilst imposing a predetermined angular orientation on these latter.

The guide element 12 is constituted by a substantially U-shaped bracket 14 (Figure 4) shaped with two parallel lateral tabs 15 fixed to a base plate 6 terminating, at the end opposite the tabs 15, with a circular eye 17 of diameter such as to be able to be fitted with free play around the shank 8, and engaged against the cover 1 (Figure 2) in correspondence with and around the locking nut 10 in such a way that the tabs 15 can assume any predetermined angular orientation with respect to the terminal 3.

The guide element 12 is provided with a stop or tooth 18 which may be disposed either on a portion of the base plate 16 or, as shown in the drawings, on the edge of the eye 17 of the plate 16; the stop tooth 18 can engage in a corresponding fixed reference seat 19 formed on the cover 1 in a predetermined fixed angular position with respect to the terminal 3.

According to the invention, the tooth 18 is formed on the plate 16 in a predetermined angular position with respect to the tabs 15 chosen in such a way as to produce, when the tooth 18 engages the seat 19 in use, a predetermined angular orientation of the tabs 15 with respect of the terminal 13, identical to that desired for the cable 5.

In this way it is possible, whatever angular position is desired for the table 5, to produce a single type of cover 1, with the reference seat 19 always positioned in the same angular position, whilst producing several different types of brackets 14, each indicated by a suitable code, there being as many different types as there are different angular orientations of the cable 5 which is it desired to provide. With reference to Figure 5, for example, there are formed three guide elements 12 which differ from one another only by the predetermined angular position of the tooth 18 with respect of the tabs 15, for example along the edge of the eye 17, whilst on the cover 1 of the alternator 2 there is a single reference seat 19 which can receive tooth 18; upon assembly the guide element 12 can therefore be rotated about the terminal 3 and stably positioned in one of the different fixed angular positions, each relating to the mounting of the alternator on a different model of the vehicle; subsequently the cable 5 is fitted between the tabs 15 of the bracket 14, thus assuming the same orientation as the guide element 12 with respect of the alternator 2; the cable 5 is locked on the terminal 3 via the connector lug 7, together with the guide element 12, by means of the second nut 11.

Obviously, what has been described is also true in a case in which the guide element 12 is provided with more than one tooth 18 at a time, with the single difference that in this case, there will be more seats 19 provided in fixed positions on the cover 1.

The tabs 15 can be made in the form of spaced parallel flat walls in such a way as to house (with slight interference, or even with clearance) a cylindrical part 21 of the connector lug 7; in another way, not shown, the tabs 15 can be arcuate so as to embrace the cylindrical part 21 of the connector lug 7 more extensively, but opening the upper part to allow the cable 5 to be snap fitted thereto.

To protect the terminal 3 and the connector lug 7 which have no insulation, from accidental contacts with other metal parts of the vehicle, a box-like guard 22 of insulating material is used, formed by a substantially cylindrical part 23 surrounding the terminal 3 and the eye end 17 of the cable-guide bracket 14, and by an adjacent part 24 formed by a lateral aperture 24a delimited by two radial walls 25 joined to the cylindrical part 23; the guard 22 can contain and house the element 12 within it and the walls 25 engage the tabs 15 and co-operate with them externally to hold the element 12 and guard 22 together against rotation.

The guard 22 is mounted freely on the cover 1, rotatable concentrically about the terminal 3, and is retained by friction by means of an outer projecting flange 26 (Figure 2); the guard 22 may alternatively be mounted in one of the ways shown in Figure 3 (left and right part) in which it is resiliently snap engaged in an aperture 27 of the cover 1 (Figure 3 - left part), through which the shank 8 passes, by means of teeth 28 projecting radially inwardly of the aperture 27; in Figure 3, right part, the guard 22 is mounted on an annular rim 29, projecting outwardly from the cover 1, and engaged by friction to the cylindrical part of the guard 22, with the interposition of an O-ring 30 to ensure a better seal against dirt and water.

The guard 22 is primarily mounted on the cover 1 (it can, for example, also be co-moulded therewith) for protection of the terminal 3, and is open both above and below to allow the introduction therethrough, and onto the terminal 3 itself, of the cable 5 in the position defined by the bracket 14; alternatively, the guard 22 can be proved with a cover 22a, indicated in chain line in Figure 2, closing it from above and pivoted on the upper edge 23a of the cylindrical part 23 of the guard 22 and snap closed, after positioning and fixing of the cable 5, by means of small lateral teeth 34.

Figure 4 is an exploded axonometric view of the system for connecting the cable 5 to the terminal 3, utilising the guide element 12 and the guard 22, where this latter is also provided, to give it greater ridgity, with a bottom wall 37 provided with a through hole 38 which can be engaged with play by the terminal 3 and performed in such a way as to remain concentric with the eye 17.

Figures 5a, 5b and 5c show three possible variants 12a, 12b, 12c of different angular positions which can be defined by the guide element 12 with the tabs 15, dependant on the different angular positions with respect to the tabs 15 of a stop 32 fixedly positioned on the bracket 14, and able to engage a reference abutment 33 fixed on the cover 1.

Figure 6 shows a simplified form of a protective guard 36 which, in this version, combines in a single component the functions of the guide element 12 and the guard 22 of Figure 2; the guard 36 is entirely similar to the guard 22 of Figure 2 but is provided additionally with a bottom wall 37 having a circular aperture 38 as in the version of Figure 4, through which the terminal 3 passes; the guard 36 is constituted by a preferably cylindrical part 39 having a lateral aperture 40 delimited by two parallel walls 41 spaced from one another by a distance suitable to retain with a small force (or to co-operate with small clearance with) the cylindrical part 21 of the connector lug 7; the cylindrical part 39 and the two walls 41 are integrally formed with the bottom wall 37 to form a guide element for the cable 5 and a protection element for the terminal 3.

The guard 36 is moreover provided with a stop 32 projecting from the lower edge 43, which can engage with a corresponding reference element 44, for example a hole 44 disposed in a fixed position on the cover 1; as previously described, the stop 42 can be formed in different angular positions along the edge 43 in different examples of the guard 46, in order to be able to orient the cable 5 in predetermined directions depending on the model of motor vehicle on which it is utilised.

The mounting of the single guard 36 takes place in the following manner: first the guard 36 is disposed against the cover 1 of the alternator 2, introducing the shank 8 of the terminal 3 into the aperture 38 and coupling the stop 42 with the reference 44 to pre-arrange the correct orientation of the cable 5 with respect to the alternator in dependence on the type of vehicle; then the cable 5 is coupled to the shank 8 by forcing the connector lug 7 between the walls 39 of the guard 36; finally the connector 7 is locked to the shank 8 by means of the nut 11; the guard 36 also remains in this manner locked onto the cover 1 by the cable 5, in turn clamped to the terminal 3. For a better locking more than one tooth 42 and the corresponding number of holes 44 may be provided.

It is intended that the system for connecting a cable to electrical apparatus according to the present invention may have modifications or additional parts introduced thereto without however departing from the ambit of the invention; for example the parts 23 and 39 of the guard 22, 36 may have a different form, for example they can be of polygonal shape.

## Claims

1. A system for connecting an electrical cable (5) to a terminal (3) of electrical apparatus (1), in the specific example an alternator for a motor vehicle, in which the said cable (5) is provided with a terminal connection element (6) which can be fixed to the said terminal (3) at a predetermined angle,
characterised in that it includes a guide element (12; 36) for the said cable (5) which can co-operate with the said terminal element (6) to determine the said predetermined angle of the cable (5), the said guide element being formed as an independent element from the said terminal (3) connectable fixedly thereto, and being provided with stop means (18; 32; 42) selectively positionable in at least one predetermined angular orientation and able to co-operate with corresponding angular reference elements (19; 33; 44) prearranged in a fixed angular position on the said apparatus (1).

2. A connection system according to Claim 1, characterised in that the said guide element (12) includes a substantially U-shape cable-guide bracket (14) able to house the said terminal connection element (6), constituted by a pair of parallel lateral tabs (15) integrally formed with a base plate (16) which can be fitted on the said terminal (3) and provided with the said stop means (18; 32) prearranged in a predetermined angular position with respect to the tabs (15) and such as to position the tabs angularly with respect to the terminal in dependence on the predetermined angle of the cable (5).

3. A connection system according to Claim 2, characterised in that the said base plate (16) terminates on the opposite side of the walls (15) with an eye (17) which can be engaged by the said terminal (3) passing therethrough.

4. A connection system according to any of the preceding claims, characterised in that the said terminal (3) and the said electrical cable (5) mounted on the said guide element (12) are protected by a cover element (22) constituted by guard (23) mounted on the said apparatus (1) concentrically with the said terminal (3).

5. A connection system according to Claim 4, characterised in that the said guard (23) is rotatably connected to the said apparatus by means of a fixed rim (26; 29) projecting from the said apparatus (1), frictionally guiding the said guard (23) which houses the said guide element (12) within it.

6. A connection system according to Claim 4, characterised is that the said guard (23) is rotatably connected to the said apparatus (2) by means of a resilient snap engagement element (28).

7. A connection system according to Claim 4, characterised in that the said cover element (22) includes a bottom wall (37) having an aperture (38) which can house the said terminal (3) passing therethrough.

8. A connection system according to Claim 7, characterised in that the said cover element (22) is provided with means (25) for non-rotatably engaging the said guide element (12).

9. A connection system according to Claim 4, characterised in that the said guard (39) also constitutes the said guide element.
